# EUROPÄISCHE PATENTSCHRIFT

(11) **EP 3 640 221 B1**
(45) Veröffentlichungstag und Bekanntmachung des Hinweises auf die Patenterteilung: **01.03.2023**
(21) Anmeldenummer: 18201450.6
(22) Anmeldetag: 19.10.2018
(51) Int. Cl.: C03B 33/07

(54) **STRAHLERSYSTEM ZUR BESTRAHLUNG UNTERSCHIEDLICH BREITER VERBUNDGLASPLATTEN**
RADIATOR SYSTEM FOR IRRADIATING DIFFERENTLY BROAD SHEET OF LAMINATED GLASS PANELS
SYSTÈME DE RAYONNEMENT POUR DES PLAQUES DE VERRE COMPOSITES DE DIFFÉRENTES LARGEURS

(43) Veröffentlichungstag der Anmeldung: 22.04.2020
(73) Patentinhaber: Heraeus Noblelight GmbH, 63450 Hanau (DE); LISEC Austria GmbH, 3353 Seitenstetten (AT)
(72) Erfinder: WEBER, Bernhard, 63450 Hanau (DE); FEHRINGER, Leopold, 3353 Seitenstetten (AT); GANGL, Jacob, 3353 Seitenstetten (AT)
(74) Vertreter: Maiwald GmbH

(56) Entgegenhaltungen:
- EP-A2- 2 003 677
- WO-A1-02/054452

## Beschreibung

### Technisches Gebiet

Die vorliegende Erfindung betrifft ein Strahlersystem zur Bestrahlung unterschiedlich breiter Verbundglasplatten, eine Glasschneidevorrichtung zum Bearbeiten unterschiedlich breiter Verbundglasplatten mit einem solchen Strahlersystem, ein Herstellungsverfahren für ein solches Strahlersystem und eine Verwendung eines solchen Strahlersystems zur Bestrahlung unterschiedlich breiter Verbundglasplatten.

Eine Verbundglasplatte kann ein Verbund oder Stapel aus einer Glasplatte, einer Kunststofffolie und gegebenenfalls einer weiteren Glasplatte sein. Die Kunststofffolie kann eine Verbundfolie sein. Eine Verbundfolie kann aus mehreren Kunststoffschichten aufgebaut sein. Eine Verbundfolie kann als Kunststofffolienlaminat bezeichnet sein.

Das Strahlersystem kann eine sequenzielle Infrarotbeheizung zum Erwärmen und Erweichen oder auch zum Schneiden der Folie in der Verbundglasplatte sein. Die Glasschneidevorrichtung kann ein Glasschneidetisch zur maschinellen Bearbeitung von Glas sein.

### Hintergrund der Erfindung

Verbundglasplatten oder Verbundsicherheitsglasplatten (VSG-Platten) werden aus Glasplatten mit Dimensionen von beispielsweise 3,2 × 6 m, kleineren oder größeren Abmaßen gefertigt. Die Verbundglasplatten müssen zum Beispiel zur Herstellung von Glasscheiben für Fenster, Bauelemente u.s.w. auf Verbundglasschneidanlagen in die entsprechend gewünschten Formate geschnitten werden. Verbundglasplatten können alternativ aus Glasplatten mit Dimensionen von beispielsweise 1,5 x 3 m oder 2,5 x 3 m gefertigt sein. Um Verbundglasscheiben in die entsprechenden Formate zu schneiden, werden zum Beispiel eine obere und eine untere Glasplatte außenseitig geritzt, eine Brechrolle oberseitig unter Druck entlang der Ritzlinie über die Glasplatte gefahren, um die untere Glasplatte zu brechen, und anschließend die obere Glasplatte durch nach unten Knicken gebrochen, sodass ein durchgehender Riss entsteht. Entlang der Risslinie werden die Glasplatten anschließend auseinandergezogen, wobei mit einer Heizeinrichtung die Folie aufgeheizt und anschließend mit einem Messer durchtrennt wird.

Konventionelle Heizeinrichtungen erstrecken sich über die gesamte Breite des Glasschneidetisches von zum Beispiel sechs Metern. Die Heizeinrichtungen werden nach dem Ritzen und Knicken der Verbundglasscheibe eingeschaltet, um die Kunststofffolie entlang der Ritzlinie zu bestrahlen und unter Einwirkung der an den Teilen der Platte anliegenden Zugkraft einen Trennspalt zu bewirken. Werden auf einer solchen Glasschneidevorrichtung deutlich kürzere Verbundglasplatten bearbeitet, wird zwangsläufig trotzdem die gesamte Länge des Strahlers eingeschaltet, so dass bei kleineren Formaten Heizenergie und Aufheizzeit verlorengeht. Weiterhin kann eine solche Heizeinrichtung aufgrund einer zulässigen Strom- bzw. Spannungsbegrenzung auf ca. 16 bis 20 A und ca. 400 bis 700 V eine Stromdichte von nur 20 bis 25 W/cm² aufweisen. Die Stromdichte sollte jedoch erhöht werden, um die Bestrahlungsdauer verringern zu können.

WO 2015/117172 A1 offenbart ein Verfahren zum Teilen von Verbundglas. Zum Teilen einer Verbundglastafel in Verbundglasscheiben werden im Bereich einer Teilungslinie in den Glasscheiben der Verbundglastafel durch örtliche Zufuhr von Wärme thermische Spannungen im Glas der Glasscheiben erzeugt, sodass gegebenenfalls unter zusätzlicher Krafteinwirkung die Verbundglastafeln in zwei Verbundglasscheiben geteilt wird. Für das örtliche, insbesondere über die gesamte Länge der Teilungslinie durchgehende Erwärmen können Infrarot- oder Laserstrahlen abgebende Heizelemente verwendet werden. Die Heizelemente sind bevorzugt auf beiden Seiten der Verbundglastafel vorgesehen.

WO 2015/081351 A1 offenbart ein Verfahren und eine Vorrichtung zum Erwärmen von Folien im Verbundglas. Beim Erwärmen von Folien im Verbundglas, beim Trennen, und um die Folie abzuschmelzen oder zu erweichen, werden von einem Heizelement Wärmestrahlen, insbesondere Infrarotstrahlen, auf die Folie gerichtet. Die Wärmestrahlen werden durch einen dem Heizelement zugeordneten Reflektor gebündelt. Die durch das Verbundglas und durch die Folie tretenden Wärmestrahlen werden auf der dem Heizstab gegenüberliegenden Seite des Verbundglases mithilfe eines weiteren Reflektors in Richtung auf die Folie reflektiert.

EP 2 942 330 A1 offenbart eine Vorrichtung zum Schneiden und Trennen von Glasplatten mit einer Trageinrichtung zum Tragen einer Glasplatte in einer im wesentlichen horizontalen Ausrichtung. Die Glasplatte umfasst eine obere und eine untere Oberfläche. Die Vorrichtung umfasst eine Positionierungsbrücke mit einem sich horizontal erstreckenden Positionierungsabschnitt, der in einem vertikalen Abstand von der unteren oder oberen Fläche der Glasplatte und den Stützmitteln angeordnet ist, während Schneidmittel, die an dem Positionierungsabschnitt angeordnet sind, ein Schneidelement umfassen, das entlang des Positionierungsabschnitts und über die untere oder obere Oberfläche der Glasplatte bewegbar ist, um die jeweilige Oberfläche in einer solchen Weise zu schneiden, dass eine lineare Ritzlinie erhalten wird. Darüber hinaus ist der Positionierungsabschnitt mit einer Trenneinrichtung zum Trennen der Glasplatte in zwei separate Glasplatten entlang der linearen Ritzlinie versehen. Die Trennmittel sind so konfiguriert, dass sie sich entlang des Positionierungsabschnitts und entlang der linearen Anreißlinie bewegen, während sie einen kontrollierten Druck, der pulsierend variiert, auf der Glasplatte entlang der linearen Anreißlinie ausüben.

EP 2 783 785 A1 offenbart ein Verfahren zum Schneiden von Flachglas. Das Flachglas wird entlang mindestens einer vorbestimmten Schnittlinie gebrochen, indem eine Ritzlinie mit der Schnittlinie auf mindestens einer der Oberflächen des Flachglases zusammenfällt und ein Wärmestrahl auf die Ritzlinie gerichtet wird, der von einer elektrischen Glühbirne in Richtung der Ritzlinie emittiert wird, wodurch eine Bruchfront in einem Punkt der Ritzlinie ausgelöst wird und der Wärmestrahl entlang der Bruchlinie bewegt wird, um ein kontinuierliches Vorrücken der Bruchfront entlang der Ritzlinie zu bewirken.

EP 1 323 681 A2 offenbart ein Verfahren zum Trennen von Verbundglastafeln, wobei eine Verbundglastafel entlang einer gewünschten Trennlinie geritzt wird und anschließend die Verbundglastafel entlang der Ritzlinie gebrochen wird und anschließend mit einer Heizvorrichtung über eine Wärme aussendende Einrichtung Folienmaterial im Bereich der Trennlinie der Verbundglastafel mit Wärme beaufschlagt wird. Es wird eine Heizvorrichtung verwendet, die in Abhängigkeit von der Trennlinienlänge auf einer entsprechenden Heizlänge den Trennlinienbereich mit Wärme beaufschlagt.

DE 101 64 070 B4 offenbart eine Vorrichtung zum Trennen von Verbundglastafeln aufweisend eine Vorrichtung zum Ritzen und Brechen der Verbundglastafeln sowie eine Heizvorrichtung, welche über eine Wärme aussendende Einrichtung Folienmaterial im Bereich einer Trennlinie einer Verbundglasscheibe mit Wärme beaufschlagt. Die Wärme aussendende Einrichtung zum teilbereichsweisen Aufheizen von unterschiedlich breiten Glasplatten weist eine Mehrzahl von unterschiedlich langen Heizstrahlern auf.

EP 3 208 245 A1 offenbart eine Vorrichtung und ein Verfahren zum Schneiden einer Verbundglasscheibe. Eine Verbundglasscheibe mit zwei Glasscheiben und einer Zwischenfolie aus thermoplastischem Material wird geschnitten auf einer mit einer Brechvorrichtung versehenen Schneidmaschine zum Aufteilen der Verbundglasscheibe in zwei Teile, die durch einen länglichen Zwischenabschnitt der Folie miteinander verbunden sind. Die Vorrichtung weist weiterhin eine Heizanordnung zum Erwärmen des länglichen Zwischenabschnitts auf, wobei die Heizanordnung mit mindestens einer Glühlampe versehen ist, die von einem Schlitten der Brechvorrichtung getragen wird.

DE 1919 673 A1 offenbart ein Verfahren und eine Vorrichtung zum thermischen Brechen von Glas.

WO 02/23591 A1 offenbart eine Strahlungsquelle für elektromagnetische Strahlung zur Ausbildung einer lang gestreckten Bestrahlungszone, wobei der wesentliche Wirkanteil der Strahlungsquelle im Bereich des nahen Infrarot, insbesondere in Wellenlängenbereichen zwischen 0,8 µm und 1,5 µm liegt. Die Strahlungsquelle umfasst eine lang gestreckte Halogenlampe, die einen röhrenförmigen, an den Enden gesockelten Glaskörper mit mindestens einer Glühbirne aufweist, und einen lang gestreckten Reflektor.

WO 02/054452 A1 offenbart eine Wärmebehandlungsvorrichtung. Eine Vielzahl von Doppelendlampen heizen das zu bearbeitende Objekt auf, um einen Wärmebehandlungsvorgang auf das Objekt anzuwenden. Mehrere Reflektoren reflektieren Strahlungswärme der Doppelendlampen auf das zu bearbeitende Objekt. Jede der Doppelendlampen umfasst einen geradlinigen lichtemittierenden Teil. Mindestens zwei Doppelendlampen aus den mehreren Doppelendlampen sind entlang einer Längsrichtung des Licht emittierenden Teils angeordnet. Die Vielzahl von Doppelendlampen sind so angeordnet, dass die lichtemittierenden Teile parallel zueinander und in mindestens zwei Stufen positioniert sind.

EP 2 003 677 A2 offenbart eine Glühfadenlampe mit mehreren Glühfadenanordnungen. DE 1 589 271 A offenbart eine elektrische Glühlampe. US 5,600,205 offenbart eine gebogene Lampe. DE 1 929 622 A offenbart eine elektrische Lampe in Langform mit abgebogenem Ende. DE 297 02 002 U1 offenbart eine Lichtquellenanordnung für einen Scanner. DE 198 22 829 A1 offenbart einen kurzweiligen Infrarot-Flächenstrahler, bei dem mehrere miteinander verbundene Infrarotstrahler unter Bildung einer gemeinsamen Abstrahlebene benachbart und parallel zueinander angeordnet sind. DE 84 34 317 offenbart eine Bestrahlungseinheit in Form eines Portals, insbesondere als Trocken- und ein Einbrennkanal für die Automobilindustrie.

### Zusammenfassung der Erfindung

Es ist eine Aufgabe der vorliegenden Erfindung, ein Strahlersystem zur Bestrahlung von Verbundglasplatten unterschiedlicher Breite und/oder Dicke bereitzustellen, welches weniger Energie verbraucht.

Diese Aufgabe wird durch ein Strahlersystem zur Bestrahlung unterschiedlich breiter Verbundglasplatten, eine Glasschneidevorrichtung zum Bearbeiten unterschiedlich breiter Verbundglasplatten mit einem solchen Strahlersystem, ein Herstellungsverfahren für ein solches Strahlersystem und eine Verwendung eines solchen Strahlersystems zur Bestrahlung unterschiedlich breiter Verbundglasplatten nach den unabhängigen Ansprüchen gelöst. Vorteilhafte Ausführungsformen und Weiterbildungen der Erfindung sind den Unteransprüchen und der nachfolgenden Beschreibung zu entnehmen.

Ein Strahlersystem gemäß der vorliegenden Erfindung zur Bestrahlung unterschiedlich breiter Verbundglasplatten umfasst mehrere, insbesondere mindestens drei, längliche Strahler. Die länglichen Strahler sind hintereinander auf einer gemeinsamen Längsachse angeordnet. Das Strahlersystem ist in einer Glasschneidevorrichtung angeordnet. Die gemeinsame Längsachse der länglichen Strahler ist parallel zu einer Schneidachse der Glasschneidevorrichtung angeordnet. Anders als aus dem Stand der Technik bekannt, weisen die Strahler jeweils zwei Enden auf, die gegenüber der gemeinsamen Längsachse abgewinkelt sind.

Die Verbundglasplatte oder Verbundsicherheitsglasplatte kann ein Verbund oder Stapel aus beispielsweise zwei Glasplatten und einer dazwischenliegenden Kunststofffolie sein. Die Verbundglasplatte kann auch weitere Schichten enthalten.

Das Strahlersystem kann eine Infrarotbeheizung zum Erwärmen und Erweichen oder auch zum Durchschneiden und/oder Trennen der Folie in der Verbundglasplatte sein. Der Strahler kann eine insbesondere kurzweilige Infrarotstrahlung vorzugsweise im Bereich zwischen 0,8 und 1,5 µm abgeben. Die Folie wird zum Trennen der Verbundglasplatte erwärmt. Gemäß einer Ausführung kann die Folie durch das Erwärmen unterhalb einer Folien-Schmelztemperatur und oberhalb einer Folien-Erweichungstemperatur erwärmt werden. Teile einer Verbundglasplatte können anschließend mit geringem Widerstand durch die Kunststofffolie voneinander getrennt werden. Gemäß einer anderen Ausführung kann die Folie durch das Erwärmen oberhalb einer Folien-Schmelztemperatur erwärmt werden. In letzterem Fall ist in einem Fokusbereich des Strahlers nach dem Schmelzen praktisch keine Folie mehr vorhanden. Teile einer Verbundglasplatte können anschließend ohne Widerstand durch die Kunststofffolie voneinander getrennt werden. Die Kunststofffolie kann eine Dicke von wenigstens 0,2 mm und/oder höchstens 10mm aufweisen, insbesondere wenigstens 0,38 mm und/oder höchstens 3,8 mm oder höchstens 4,56 mm aufweisen. Die Glasschneidevorrichtung kann ein Glasschneidetisch zur maschinellen Bearbeitung von Glas sein.

Der Begriff "längliche Strahler" bedeutet, dass die Strahler länger als breit sind. In einer Ausführungsform sind die länglichen Strahler jeweils gleich lang. Sie sind geometrisch nacheinander in Reihe angeordnet. Die Strahler können unabhängig voneinander aktivierbar und steuerbar sein und damit elektrisch parallelgeschaltet sein. Die Abstrahlrichtung der Strahler kann im Wesentlichen senkrecht auf eine zu bestrahlende Verbundglasplatte sein. Die Strahler können entlang einer Breite einer zu bestrahlenden Verbundglasplatte senkrecht zu einer Förderrichtung der Verbundglasplatte angeordnet sein.

Die Enden oder Schenkel der einzelnen Strahler sind gegenüber der gemeinsamen Längsachse abgewinkelt, sodass die Stromanschlüsse nicht in der Ebene der Strahler liegen. Insbesondere weisen die Schenkel der Strahler relativ zur Längsachse der Strahler weg von der Arbeitsebene, in der sich eine zu bearbeitende Verbundglasplatte erstreckt. Das "Abwinkeln" ist so zu verstehen, dass es zu einer Krümmung des Strahlers führt, nicht zu einem eckigen Verlauf des Strahlers. Durch das Abwinkeln oder Rausbiegen werden die empfindlichen Enden der Strahler vor der Wärmebelastung durch die Strahler geschützt und so ihre Lebensdauer erhöht. Weiterhin wird eine homogene und kontinuierliche Bestrahlung durch die mehreren Strahler erreicht.

Indem mindestens drei Strahler entlang einer gemeinsamen Längsachse angeordnet sind, ist es möglich, dass jeweils nur so viele Strahler verwendet werden, wie für die aktuelle Bauteilbreite oder Bearbeitungslänge notwendig ist. Vorzugsweise werden zwischen 3 und 10 Strahler verwendet. Durch die gegenüber dem Stand der Technik höhere Anzahl der Strahler kann die Länge der einzelnen Strahler reduziert werden. Kürzere Strahler sind in der Handhabung deutlich einfacher als längere. Weiterhin wird im Gegensatz zum Stand der Technik nicht ein 6 m langer Strahler verwendet, um zum Beispiel ein 1,5 m langes Bauteil zu bestrahlen. Auf diese Weise kann erheblich Energie und Zeit gespart werden.

In einer Ausführungsform sind die zwei Enden der Strahler gegenüber der gemeinsamen Längsachse um einen Winkel zwischen 50 und 140° abgewinkelt im Sinne von rausgebogen. Vorzugsweise sind sie um einen Winkel zwischen 80 und 100° und weiter bevorzugt um 90° abgewinkelt. Auf diese Weise können die Stromanschlüsse aus der Ebene der Strahler zum Beispiel nach oben herausgeführt werden. Damit können sich die Stromanschlüsse außerhalb der direkten Bestrahlung befinden und bleiben kühler, was ihre Lebensdauer erhöht.

In einer Ausführungsform umfasst das Strahlersystem zwischen 3 und 10 längliche Strahler. Vorzugsweise umfasst das Strahlersystem zwischen 6 und 8 längliche Strahler und weiter bevorzugt 7 Strahler. Die Anzahl der einzelnen Strahler ist höher als üblich, sodass passgenau die richtige Anzahl und die richtige Auswahl der Strahler für jedes spezifische Bauteil ausgewählt werden kann.

Die Strahler können Rundrohrstrahler sein.

Die Strahler können als Doppelrohrstrahler ausgeführt sein, wobei nur eines der Rohre mit einer Heizwendel besetzt ist. Durch die Doppelrohrauführung wird der Strahler ähnlich wie bei einem H-Träger mechanisch stabilisiert.

Insbesondere weisen die Strahler eine Länge von wenigstens 200 mm oder 300 mm und/oder höchstens 1200 mm oder höchstens 1500 mm auf. In einer Ausführungsform weisen die Strahler jeweils eine Länge von wenigstens 400 und/oder höchstens 500 mm auf. Gemäß einer Ausführung weisen die Strahler eine Länge von wenigstens 850 und/oder höchstens 950 mm auf. Insbesondere werden Strahler mit einer Länge von ungefähr 450 mm und Strahler mit einer Länge von ungefähr 950 mm bevorzugt. Die hier genannten Längen werden, in einer Aufsicht auf die freien Enden der Schenkel des Strahlers gesehen, von einem Mittelpunkt des freien Endes des einen Schenkels des Strahlers zum Mittelpunkt des freien Endes des anderen Schenkels des Strahlers gemessen. In einer Ausführungsform sind die länglichen Strahler jeweils gleich lang. Die erfindungsgemäße Strahlerlänge ist deutlich kürzer als die zum Beispiel 6 m langen Strahler des Standes der Technik. Mit den erfindungsgemäßen Strahlerlängen können gängige Glasformate und Schnittlängen von ca. 3300 mm / 3700 mm / 4700 mm / 6100 mm passgenau und mit wenig oder ohne über die Bauteilgröße hinausgehende Bestrahlung bearbeitet werden. Auf diese Weise wird Energie eingespart und der Wärmeeintrag in das Bauteil und daraus resultierende Werkstoffschädigungen reduziert. Auch wird das Bauteil nichts so stark erwärmt, dass es nicht mehr von Hand positioniert werden kann. Weiterhin wird der Transport, die Montage und insgesamt die Handhabung der Strahler durch ihre geringe Länge erleichtert. Gemäß einer Ausführung umfasst das Strahlersystem ausschließlich Strahler gleicher Länge. Gemäß einer anderen Ausführung umfasst das Strahlersystem wenigstens zwei Strahler unterschiedlicher Länge.

In einer Ausführungsform weist jeder Strahler eine Länge auf, die kleiner ist als die Breite einer zu bestrahlenden Verbundglasplatte. Durch die gegenüber dem Stand der Technik reduzierte Länge des erfindungsgemäßen Strahlersystems muss im Gegensatz zum Stand der Technik kein hoher Strom mit Überspannung durch Spezialanschlüsse und einen Transformator bereitgestellt werden. Anstatt dessen kann das erfindungsgemäße Strahlersystem mit normaler Netzspannung betrieben werden und eine Leistung von bis zu 45 W Strahlungsleistung pro Zentimeter Strahlerlänge erreichen. Die Strahler des Standes der Technik erreichen nur bis zu 25 W Strahlungsleistung pro Zentimeter Strahlerlänge.

In einer Ausführungsform weisen die Strahler jeweils eine Heizwendel oder Glühwendel auf, die geeignet ist, um eine Kunststofffolie im Inneren einer Verbundglasplatte zu erwärmen und zu erweichen. Die Heizwendel kann auch dafür ausgelegt werden, dass der Strahler durch den Wärmeeintrag der Heizwendel die Kunststofffolie durchtrennen kann, insbesondere derart, dass Glasplatten ohne zusätzliches Trennwerkzeug geteilt werden können. Die Kunststofffolie kann eine Dicke von wenigstens 0,2 mm und/oder höchstens 10 mm aufweisen, insbesondere von wenigstens 0,38 mm und/oder höchstens 4,56 mm.

In einer Ausführungsform weisen die abgewinkelten Enden oder Schenkel der Strahler gegenüber der gemeinsamen Längsachse einen Biegeradius auf und die Heizwendeln in den Strahlern erstrecken sich entlang der gemeinsamen Längsachse und über die Scheitelpunkte der Biegeradien hinaus. Unter "abgewinkelt" wird hier eine Krümmung verstanden, kein eckiger Verlauf des Strahlers. Der "Biegeradius" bezieht sich auf die Krümmung, die der Strahler nach dem Abwinkeln im Sinne von Rausbiegen aufweist. Der "Scheitelpunkt" ist der Punkt auf dem abgewinkelten und gekrümmten Strahler, bei dem die Krümmung ein lokales Extremum, hier ein lokales Minimum, besitzt. Der Biegeradius kann zwischen R20 und R30 liegen. Der Fachmann weiß, dass "Rx" einen Biegeradius anhand eines entlang der Biegung konstanten Krümmungsradius "x" in mm bezüglich eines imaginären Krümmungsmittelpunktes des Biegeradius bezeichnet. Durch das "Hineinziehen" der Heizwendel in die Biegeradien und darüber hinaus wird eine homogene Bestrahlung des Bauteils entlang der mehreren Strahler erreicht und eine mögliche Inhomogenität im Übergang zwischen zwei benachbarten Strahlern reduziert oder vermieden.

Die Heizwendel endet in dieser Ausführungsform nach den beiden Scheitelpunkten, aber noch vor den Enden der Schenkel des Strahlers. Diese Schenkelenden, die elektrische Anschlusselemente des Strahlers aufweisen können, weisen also keine Heizwendel auf und sind demnach nicht direkt beheizt. In anderen Worten, der Glühbereich der Heizwendel fängt erst in einem gewissen Abstand zu dem unbeheizten Schenkelende des Strahlers an. Dieser Abstand kann zwischen 60 und 90 mm betragen. Der Abstand kann zum Beispiel 75 mm betragen. Diese Zahlenwerte können sich auf einen zwischen 90 und 120 mm langen Schenkel und insbesondere auf einen 107 mm langen Schenkel beziehen. Durch das Freilassen der Schenkelenden des Strahlers von der Heizwendel werden die elektrischen Anschlusselemente auf den Schenkelenden vor Hitze geschützt und so ihre Lebensdauer erhöht. Die hier genannten oberen Begrenzungen des Abstands ergeben sich aus dem üblicherweise durch zum Beispiel Schneidvorrichtungen und Fördereinrichtungen begrenzten Bauraum des Strahlers.

Die einzelnen Strahler bzw. ihrer Heizwendeln können unabhängig voneinander gesteuert und insbesondere ein- und ausgeschaltet werden. Es ist auch möglich ein Bauteil und seine Dimensionierung (zum Beispiel anhand einer Kennzeichnung, beispielsweise per RFID Tag) zu erkennen oder (zum Beispiel per Laser) zu vermessen und in Abhängigkeit davon eine geeignete Anzahl und Auswahl der Strahler ein und wieder auszuschalten oder ihre Stärke zu regeln.

In einer Ausführungsform beträgt die Leistungsdichte des Strahlersystems zwischen 30 und 50 W/cm². Vorzugsweise beträgt die Leistungsdichte des Strahlersystems zwischen 40 und 50 W/cm². Bei herkömmlichen Strahlern können nur deutlich geringere Leistungsdichten erreicht werden. Durch die hohe Leistungsdichte des erfindungsgemäßen Strahlersystems kann eine kürzere Bestrahlungsdauer ermöglicht werden, was eine Aufheizung und eine thermische Schädigung der verbleibenden Kunststofffolie im umgebenden Verbundglas reduziert. Die Bestrahlungs- oder Heizdauer ist abhängig von der Foliendicke und kann zwischen ungefähr 5s und 40s betragen. Theoretisch sind auch Leistungsdichten um 200 W/cm² möglich.

In einer Ausführungsform weist mindestens einer der Strahler einen Lichtaustrittsspalt und einen Reflektor auf. Der Lichtaustrittsspalt im Strahler bleibt zur Strahlungsabgabe in Richtung der Verbundglasplatte frei. Der Reflektor kann vom Strahler in Richtung des Reflektors ausgesendete Strahlung in Richtung des Lichtaustrittsspalts reflektieren. Der Reflektor kann eine Beschichtung, insbesondere eine Goldbeschichtung, am Umfang des Strahlers sein. Alternativ oder zusätzlich kann der Reflektor auch aus Aluminium oder einem porösen Quarzglas (beispielsweise Heraeus QRC^{®} "Quartz Reflektive Coating") sein. Der Reflektor kann die Fokussierung der Strahlung auf eine möglichst schmale Linie entlang der Kunststofffolie im Verbundglas und damit auch einen möglichst schmalen Erwärmungs- oder Schmelzbereich ermöglichen. Auf diese Weise kann die Leistungsdichte des Strahlers reduziert werden. Weiterhin verhindert oder reduziert der Reflektor ein Aufheizen der Strahlerperipherie, der umgebenden Bauteile der Glasschneidevorrichtung und der Verbundglasplatte außerhalb der Schnittlinie.

Die Strahler können jeweils einen Durchmesser zwischen 1 und 2 cm aufweisen. Vorzugsweise können sie jeweils einen Durchmesser zwischen 1,2 und 1,5 cm und weiter bevorzugt ein Durchmesser von 13,7 mm aufweisen. Diese Durchmesser ermöglichen ein leichtes Biegen der Schenkel des Strahlers. Die Strahler können identisch oder unterschiedlich dimensioniert sein.

Der Lichtaustrittsspalt kann ungefähr 8 mm breit sein. Er kann sich entlang der gesamten Strahlerlänge erstrecken. Der Strahlerdurchmesser kann ungefähr 13 mm betragen. Die Heizwendel kann einen Durchmesser von ungefähr 2 mm aufweisen. Der Lichtaustrittsspalt ist schmaler als im Stand der Technik. Die erfindungsgemäßen geringen Werte für den Strahlerdurchmesser, den Lichtaustrittsspalt und/oder den Heizwendeldurchmesser ermöglichen eine bessere Fokussierung der Strahlung auf eine möglichst schmale Linie entlang der Kunststofffolie im Verbundglas.

Die abgewinkelten Enden oder Schenkel benachbarter Strahler können in einem direkten Berührkontakt miteinander stehen. Die abgewinkelten Enden benachbarter Strahler können auch einen (geringen) Abstand voneinander aufweisen, zum Beispiel maximal 1 cm, maximal 5 mm oder maximal 2 mm.

Die vorliegende Erfindung betrifft weiterhin eine Glasschneidevorrichtung zum Bearbeiten (Teilen) unterschiedlich breiter Verbundglasplatten mit einem Strahlersystem, das mindestens drei Strahler umfasst. Das Strahlersystem ist vorzugsweise das oben beschriebene Strahlersystem.

In einer Ausführungsform umfasst die Glasschneidevorrichtung eine Steuereinheit, die gestaltet ist, um nur einen oder mehrere der Gesamtanzahl von Strahlern ein- und auszuschalten und/oder ihre Stärke zu regeln. So könnten zum Beispiel genau einer, genau zwei, genau drei der Strahler eingeschaltet werden. Bei einer Ausführung umfasst die Glasschneidevorrichtung eine bestimmte Anzahl einzeln und/oder individuell ansteuerbarer Strahler.

In einer Ausführungsform umfasst die Glasschneidevorrichtung weiterhin einen Sensor, der gestaltet ist, um eine Breite einer zu bearbeitenden Verbundglasplatte zu erfassen und als Input für die Steuereinheit zum Beispiel zur Steuerung der passenden Anzahl von Strahlern bereitzustellen.

In einer Ausführungsform umfasst die Glasschneidevorrichtung weiterhin eine Schneidevorrichtung zum Schneiden unterschiedlich breiter Verbundglasplatten entlang einer Schneidachse parallel zu einer gemeinsamen Längsachse von länglichen Strahlern des Strahlersystems.

Die Glasschneidevorrichtung kann weiterhin eine Fördervorrichtung zum Fördern einer Verbundglasplatte relativ zu den Strahlern aufweisen.

Die Glasschneidevorrichtung kann ein zweites Strahlersystem umfassen, welches auf der dem ersten (bisher beschriebenen) Strahlersystem gegenüberliegenden Seite einer zur bearbeitenden Verbundglasplatte angeordnet ist.

In dem Glasschneidetisch ist vorzugsweise keine aktive Kühlung, wie zum Beispiel ein Lüfter, zum Kühlen des Strahlers oder der Strahlerperipherie vorgesehen. Eine Kühlung kann unter anderem deswegen entfallen, weil die Bestrahlungsdauer dank relativ hoher Leistungsdichten der Strahler kürzer als bei herkömmlichen Strahlern sein kann. Ohne Kühlung ist der Aufbau des Glasschneidetisches einfacher und es wird weniger Energie benötigt.

Die vorliegende Erfindung betrifft weiterhin ein Herstellungsverfahren für ein Strahlersystem zur Bestrahlung unterschiedlich breiter Verbundglasplatten. Das Herstellungsverfahren umfasst die folgenden Schritte:
- Bereitstellen von mindestens drei länglichen Strahlern und
- Anordnen der Strahler hintereinander auf einer gemeinsamen Längsachse.

Die länglichen Strahler weisen jeweils zwei Enden auf, die gegenüber der gemeinsamen Längsachse abgewinkelt sind.

Die vorliegende Erfindung betrifft weiterhin eine Verwendung des hier beschriebenen Strahlersystems zur Bestrahlung unterschiedlich breiter Verbundglasplatten.

Die Verwendung des Strahlersystems und die Bearbeitung einer Verbundglasplatte kann etwa wie folgt verlaufen:
a) die Verbundglasplatte auf dem Glasschneidetisch positionieren,
b) die obere Glasplatte schneiden,
c) die untere Glasplatte schneiden, und
d) die Folie erweichen und/oder schmelzen.

Insbesondere wird die Bearbeitung in der Schrittreihenfolge (a), dann (b) und (c), wobei insbesondere zunächst (b) und nachfolgend (c) erfolgt, dann (d) durchgeführt. Alternativ können die Schritte (b) und (c) zeitlich überlappend, insbesondere gleichzeitig, durchgeführt werden. Das Schneiden der Glasplatte in den Schritten b) und c) erfolgt in einer gemeinsamen Ritzebene senkrecht zur Ebene der Glasplatte. Das Erweichen und/oder Schmelzen der Folie erfolgt durch Erwärmen mittels des Strahlersystems, vorzugsweise entlang der Ritzebene, bevorzugt fokussiert auf den Bereich der Ritzebene. Anschließend kann die Verbundglasplatte in mehrere Verbundglasplatten-Teile getrennt werden, indem auf die Verbundglasplatten-Teile entgegen gerichtete Zugkräfte zum Zerteilen der Verbundglasplatte entlang der Ritzebene einwirken. Falls die Folie entlang der Ritzebene nur erweicht und nicht vollständig geschmolzen wurde, kann die Folie durchschnitten werden.

Eine andere Möglichkeit ist ein Ritzen der oberen Glasplatte und der unteren Glasplatte der Verbundglasscheibe, ein wechselseitiges Überbiegen oder Knicken entlang der Ritzlinien, um die angeritzten Glasplatten vollständig aufzubrechen, und ein abschließendes Trennen oder Durchschneiden der Folie. Die Folie kann durch die Strahler des Strahlersystems so weit erwärmt und erweicht werden, dass ein Spalt durch mechanisches Auseinanderziehen der Verbundglasplattenteile erzeugt werden kann und die Folie zum Beispiel mittels eines Trennmessers entlang des Spalte durchgeschnitten werden kann.

Weitere Merkmale, Vorteile und Anwendungsmöglichkeiten der vorliegenden Erfindung ergeben sich aus der nachfolgenden Beschreibung, den Ausführungsbeispielen und den Figuren. Alle beschriebenen und/oder bildlich dargestellten Merkmale können unabhängig von ihrer Darstellung in einzelnen Ansprüchen, Figuren, Sätzen oder Absätzen miteinander kombiniert werden. In den Figuren stehen gleiche Bezugszeichen für gleiche oder ähnliche Objekte.

### Kurze Beschreibung der Figuren

- **Figuren 1a und 1b**: zeigen ein Strahlersystem gemäß der vorliegenden Erfindung zur Bestrahlung unterschiedlich breiter Verbundglasplatten und eine Glasschneidevorrichtung mit einem solchen Strahlersystem.
- **Figuren 2a bis 2e**: zeigen mehrere Ansichten eines einzelnen Strahlers des Strahlersystems gemäß der vorliegenden Erfindung.
- **Figur 3**: zeigt eine schematische Ansicht der Glasschneidevorrichtung gemäß der vorliegenden Erfindung zum Bearbeiten unterschiedlich breiter Verbundglasplatten.
- **Figur 4**: zeigt eine schematische Ansicht eines Herstellungsverfahrens für ein Strahlersystem zur Bestrahlung unterschiedlich breiter Verbundglasplatten.

### Detaillierte Beschreibung der Ausführungsbeispiele

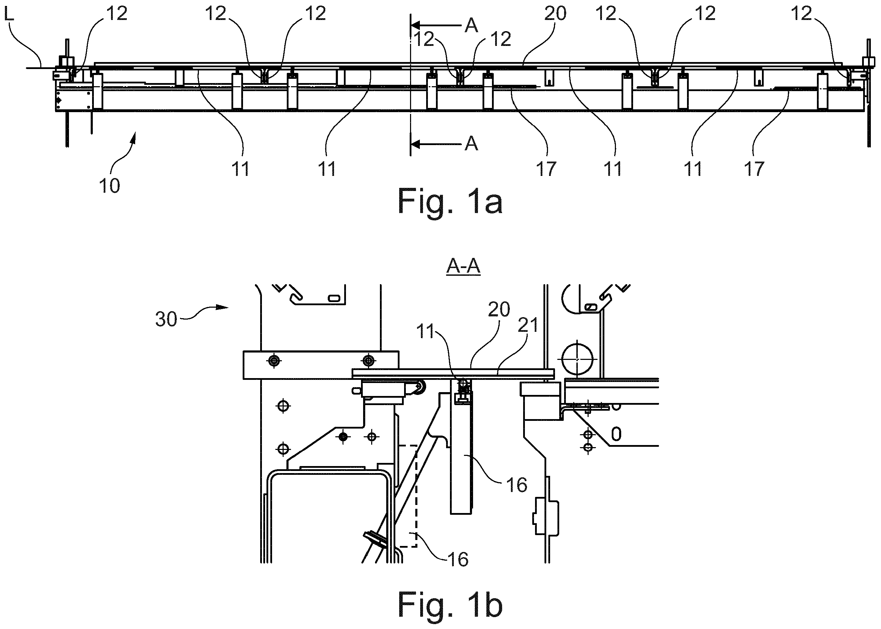

**Figuren 1a und 1b** zeigen ein Strahlersystem 10 gemäß der vorliegenden Erfindung zur Bestrahlung unterschiedlich breiter Verbundglasplatten 20 und eine Glasschneidevorrichtung 30 mit einem solchen Strahlersystem 10. Das Strahlersystem 10 umfasst hier vier längliche Strahler 11. Der Begriff "länglich" bedeutet, dass die Strahler 11 länger als breit sind. Insbesondere beträgt die Länge eines länglichen Strahlers wenigstens das zehnfache des Strahlerdurchmessers. Die länglichen Strahler 11 sind hintereinander auf einer gemeinsamen Längsachse L angeordnet. Die Strahler 11 weisen jeweils zwei Enden 12 auf, die gegenüber der gemeinsamen Längsachse L abgewinkelt sind, sodass die Stromanschlüsse an den Enden 12 nicht in der Ebene des Strahlers 11 liegen. Figuren 1a und 1b zeigen auch eine Verbund(sicherheits)glasplatte 20 aus zwei Glasplatten mit einer dazwischenliegenden Kunststofffolie.

Die Strahler 11 können IR Strahler sein, die eine kurzwellige Infrarotstrahlung abgeben, um die Kunststofffolie zu erwärmen, zu erweichen und ggf. durchzuschneiden. Die Strahler 11 sind geometrisch nacheinander in Reihe angeordnet und können unabhängig voneinander aktiviert und gesteuert werden, sie sind also elektrisch parallelgeschaltet. Jeder einzelne Strahler 11 weist eine Länge auf, die kleiner ist als die Breite der zu bestrahlenden Verbundglasplatte 20. Die Strahler 11 sind gleich lang. Die Abstrahlrichtung der Strahler 11 ist im Wesentlichen senkrecht auf die zu bestrahlende Verbundglasplatte 20. Die Strahler 11 werden über eine Energiezuführung 17 mit Energie versorgt.

Da vier Strahler 11 entlang einer gemeinsamen Längsachse L angeordnet sind, ist es möglich, dass jeweils nur so viele Strahler 11 verwendet werden, wie für die aktuelle Verbundglasplattenbreite notwendig ist. Würde eine nicht gezeigte schmalere Verbundglasplatte 20 bearbeitet, so könnten zum Beispiel genau einer, genau zwei oder oder genau drei der vier Strahler 11 eingeschaltet werden. Auf die Weise kann Energie und Zeit gespart werden. Die hohe Anzahl der Strahler 11 ermöglicht es, die Länge der einzelnen Strahler 11 zu reduzieren. Kürzere Strahler 11 sind in der Handhabung deutlich einfacher als längere.

Die jeweils zwei Enden 12 der Strahler 11 sind gegenüber der gemeinsamen Längsachse L um 90° abgewinkelt. Auf diese Weise werden die Stromanschlüsse aus der Ebene der Strahler 11 herausgeführt, sodass sich die Stromanschlüsse außerhalb der direkten Bestrahlung befinden und kühler bleiben, was ihre Lebensdauer erhöht. Die abgewinkelten Enden 12 oder Schenkel benachbarter Strahler 11 stehen in direktem Berührkontakt miteinander.

Die Strahler 11 weisen jeweils einen Durchmesser von ungefähr 13,7 mm auf. Die Leistungsdichte des Strahlersystems 10 beträgt zwischen 30 und 50 W/cm². Durch die hohe Leistungsdichte des erfindungsgemäßen Strahlersystems 10 kann eine kürzere Bestrahlungsdauer ermöglicht werden, was eine Aufheizung und eine thermische Schädigung der verbleibenden Kunststofffolie im umgebenden Verbundglas reduziert.

Die Strahler 11 werden in einer Halterung 16 gehalten, die, wie in der Figur 1B gezeigt, zwischen einer Heizposition (durchgezogene Linien) und einer Parkposition (gestrichelte Linien) bewegt werden kann.

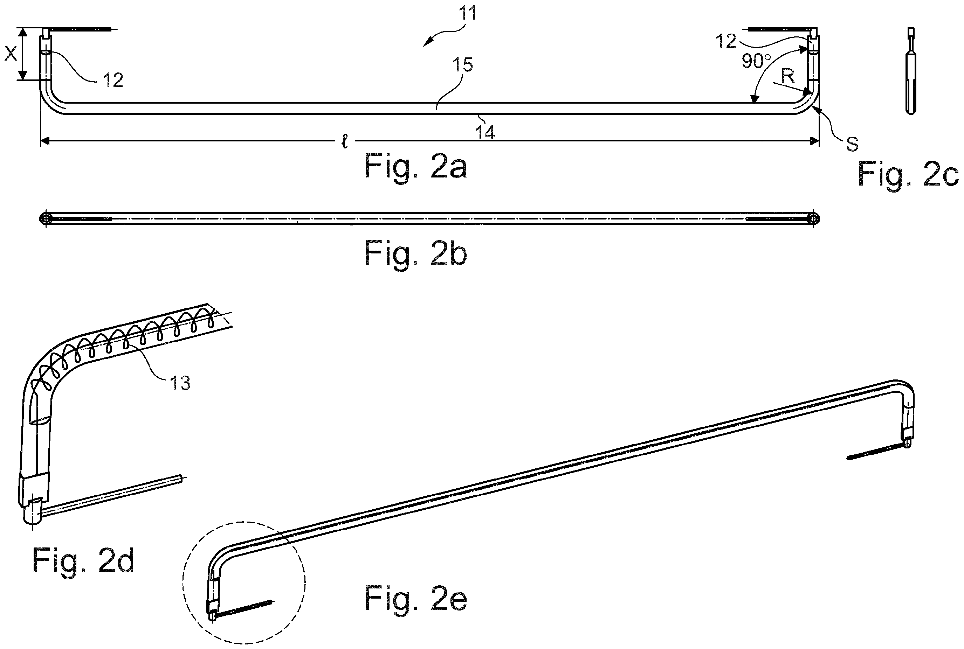

**Figuren 2a bis 2e** zeigen mehrere Ansichten eines einzelnen Strahlers 11 des Strahlersystems 10 gemäß der vorliegenden Erfindung. Der Strahler 11 weist eine Länge von 950 mm vom Mittelpunkt des einen elektrischen Anschlusses zum Mittelpunkt des anderen elektrischen Anschlusses auf. Die Länge über alles des Strahlers 11 vom äußersten Umfang des einen Schenkels zum äußersten Umfang des anderen Schenkels beträgt im Wesentlichen 964 mm. Die Länge des Schenkels zwischen dem freien Schenkelende und dem Außendurchmesser im länglichen Stück des Strahlers kann zum Beispiel ungefähr 107 mm betragen.

Der Strahler 11 ist ein Rundrohrstrahler aus Quarz mit einer Heizwendel 13 im Inneren. Die Heizwendel 13 oder Glühwendel ist geeignet, um die Kunststofffolie der Verbundglasplatte 20 zu erwärmen, zu erweichen und gegebenenfalls zu zerteilen.

Die beiden hier um ungefähr 90° abgewinkelten Enden 12 oder Schenkel des Strahlers 11 weisen gegenüber der Längsachse L des Strahlers 11 einen Biegeradius auf. Der Biegeradius ist hier zum Beispiel an beiden Seiten ungefähr R25. Die beiden Enden 12 des Strahlers 11 bilden jeweils einen elektrischen Anschluss in Form einer Litze mit gegebenenfalls einem Isolierungsabschnitt.

Die Heizwendel 13 erstreckt sich im Strahler 11 entlang der Längsachse L und über die Scheitelpunkte S der beiden Biegungen R hinaus. Die Heizwendel 13 endet also in dem Strahler 11 nach den beiden Scheitelpunkten S, aber noch vor den beiden freien Enden der Schenkel 12 des Strahlers. Die freien Enden der Schenkel 12 der Strahler 11 weisen also keine Heizwendel 13 auf und sind daher unbeheizt oder zumindest nicht direkt beheizt. Der Glühbereich der Heizwendel 13 fängt erst mit einem gewissen Abstand x von zum Beispiel ungefähr 75 mm zu dem unbeheizten Schenkelende des Strahlers an. Die gesamte beheizte Länge kann zum Beispiel ungefähr 979 mm betragen. Durch das "Hineinziehen" der Heizwendel 13 in die Biegeradien R und darüber hinaus wird eine homogene Bestrahlung des Bauteils entlang der mehreren Strahler 11 erreicht und eine mögliche Inhomogenität im Übergang zwischen zwei benachbarten Strahlern 11 reduziert oder vermieden.

Der Strahler 11 weist einen Lichtaustrittsspalt 14 und einen Reflektor 15 auf. Der Lichtaustrittsspalt 14 erstreckt sich über die gesamte Länge des Strahlers 11 und dient zur Strahlungsabgabe in Richtung der Verbundglasplatte 20. Der Reflektor 15 reflektiert vom Strahler 11 in Richtung des Reflektors 15 ausgesendete Strahlung in Richtung des Lichtaustrittsspalts 14. Der Reflektor 15 ist hier eine Goldbeschichtung am Umfang des Strahlers 11, wobei nur der Lichtaustrittsspalt 14 freigelassen ist. Der Reflektor 15 z.B. in Form der Goldbeschichtung kann sich entlang der Längsachse L und über die Biegeradien R der abgewinkelten Enden 12 des Strahlers 11 hinaus erstrecken. Der Reflektor 15 kann sich auch noch über die beheizte Länge, also über die Heizwendel 13 hinaus erstrecken. Beispielsweise kann sich der Reflektor 15 an jedem Ende um noch ungefähr 10 mm über die beheizte Länge hinaus erstrecken. Der Reflektor 15 ermöglicht die Fokussierung der Strahlung auf eine möglichst schmale Linie entlang der Kunststofffolie im Verbundglas und damit einen möglichst schmalen Schmelzbereich. Auf diese Weise erlaubt der Reflektor 15 eine weitere Reduzierung der Leistungsdichte des Strahlers 11. Weiterhin verhindert oder reduziert der Reflektor 15 ein Aufheizen der Strahlerperipherie und der umgebenden Bauteile der Glasschneidevorrichtung 30.

Bei einem Strahlerdurchmesser von ungefähr 13,87 mm kann der Lichtaustrittsspalt 14 ungefähr 8 mm breit sein. Er kann sich entlang der gesamten Strahlerlänge erstrecken. Die Heizwendel 13 kann einen Durchmesser von ungefähr 2 mm aufweisen. Der Lichtaustrittsspalt 14 ist schmaler als im Stand der Technik. Die erfindungsgemäß möglichen, geringen Werte für den Strahlerdurchmesser, den Lichtaustrittsspalt 14 und/oder den Heizwendeldurchmesser ermöglichen eine bessere Fokussierung der Strahlung auf eine möglichst schmale Linie entlang der Kunststofffolie im Verbundglas.

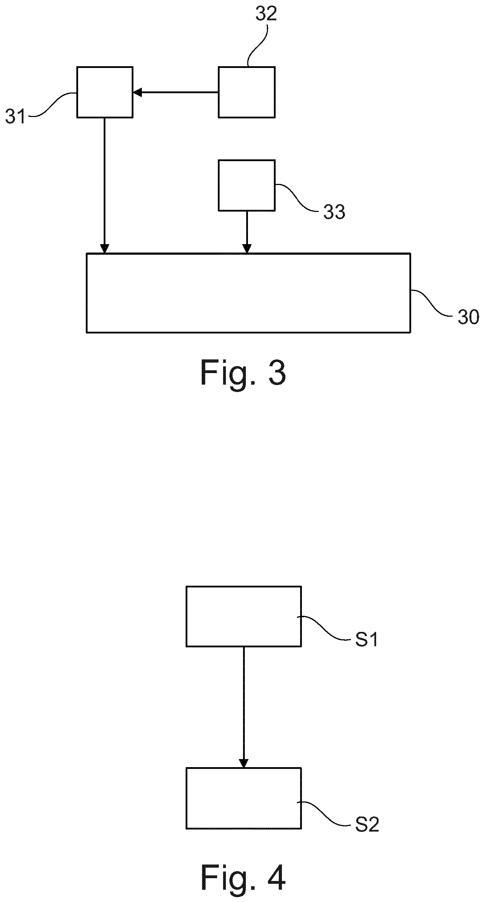

**Figur** 3 zeigt eine schematische Ansicht der Glasschneidevorrichtung 30 gemäß der vorliegenden Erfindung zum Bearbeiten unterschiedlich breiter Verbundglasplatten 20. Die Glasschneidevorrichtung 30 kann das oben beschriebene Strahlersystem 10 mit mehreren Strahlern 11 umfassen.

Die Glasschneidevorrichtung 30 umfasst eine Steuereinheit 31, die gestaltet ist, um nur einen oder mehrere der Gesamtanzahl von Strahlern 11 ein- und auszuschalten. Die einzelnen Strahler 11 bzw. ihre Heizwendeln 13 werden unabhängig voneinander gesteuert und ein- und aus ausgeschaltet. Die Glasschneidevorrichtung 30 umfasst weiterhin einen Sensor 32, der gestaltet ist, um eine Breite einer zu bearbeitenden Verbundglasplatte 20 zu erfassen und als Input für die Steuereinheit 31 bereitzustellen. Das Bauteil und seine Dimensionierung kann zum Beispiel per RFID Tag erkannt oder zum Beispiel per Laser vermessen werden. In Abhängigkeit davon kann die Steuereinheit 31 eine geeignete Anzahl und Auswahl der Strahler 11 ein und wieder auszuschalten oder ihre Stärke regeln.

Die Glasschneidevorrichtung 30 umfasst weiterhin eine Schneidevorrichtung 33 zum Schneiden unterschiedlich breiter Verbundglasplatten 20 entlang einer Schneidachse parallel zu einer gemeinsamen Längsachse L von länglichen Strahlern 11 des Strahlersystems 10.

**Figur** 4 zeigt eine schematische Ansicht eines Herstellungsverfahrens für ein Strahlersystem 10 zur Bestrahlung unterschiedlich breiter Verbundglasplatten 20. Das Herstellungsverfahren umfasst die folgenden Schritte:
- Bereitstellen von mindestens drei länglichen Strahlern 11 (S1) und
- Anordnen der Strahler 11 hintereinander auf einer gemeinsamen Längsachse L (S2).

Die länglichen Strahler 11 weisen jeweils zwei Enden 12 auf, die gegenüber der gemeinsamen Längsachse L abgewinkelt sind.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Ein Strahlersystem (10) zur Bestrahlung unterschiedlich breiter Verbundglasplatten (20),
welches zumindest drei längliche Strahler (11) umfasst,
wobei die länglichen Strahler (11) hintereinander auf einer gemeinsamen Längsachse (L) angeordnet sind,
wobei das Strahlersystem (10) in einer Glasschneidevorrichtung (30) angeordnet ist, und
wobei die gemeinsame Längsachse (L) der länglichen Strahler (11) parallel zu einer Schneidachse (X) der Glasschneidevorrichtung (30) angeordnet ist,
**dadurch gekennzeichnet, dass**
die länglichen Strahler (11) jeweils zwei Enden (12) aufweisen, die gegenüber der gemeinsamen Längsachse (L) abgewinkelt sind.

2. Strahlersystem (10) nach Anspruch 1, wobei die Strahler (11) jeweils eine Heizwendel (13) zum Erwärmen und/oder Erweichen einer Kunststofffolie (21) im Inneren einer Verbundglasplatte (20) aufweisen.

3. Strahlersystem (10) nach Anspruch 1 oder 2, wobei die abgewinkelten Enden (12) der Strahler (11) gegenüber der gemeinsamen Längsachse (L) einen Biegeradius (R) aufweisen und sich die Heizwendeln (13) in den Strahlern (11) entlang der gemeinsamen Längsachse (L) und über die Scheitelpunkte (S) der Biegeradien (R) hinaus erstrecken.

4. Strahlersystem (10) nach einem der vorherigen Ansprüche, wobei das Strahlersystem (10) höchstens 10 längliche Strahler (11) umfasst, vorzugsweise wenigstens 6 und/oder höchstens 8 längliche Strahler (11).

5. Strahlersystem (10) nach einem der vorherigen Ansprüche, wobei die Strahler (11) jeweils eine Länge (l) wenigstens 200 mm und/oder höchstens 1200 mm aufweisen.

6. Strahlersystem (10) nach einem der vorherigen Ansprüche, wobei die mehreren länglichen Strahler (11) jeweils gleich lang sind.

7. Strahlersystem (10) nach einem der vorherigen Ansprüche, wobei die Leistungsdichte des Strahlersystems (10) zwischen 30 und 50 W/cm² beträgt, vorzugsweise zwischen 40 und 50 W/cm².

8. Strahlersystem (10) nach einem der vorherigen Ansprüche, wobei mindestens einer der Strahler (11) einen Lichtaustrittsspalt (14) und einen Reflektor (15) aufweist, wobei der Reflektor (15) von dem Strahler (11) in Richtung des Reflektors (15) ausgesendete Strahlung in Richtung des Lichtaustrittsspalts (14) reflektiert.

9. Eine Glasschneidevorrichtung (30) zum Bearbeiten unterschiedlich breiter Verbundglasplatten (20) mit einem Strahlersystem (10) nach einem der vorherigen Ansprüche.

10. Glasschneidevorrichtung (30) nach dem vorherigen Anspruch, weiterhin umfassend eine Steuereinheit (31), die gestaltet ist, um einzelne, insbesondere nur einen oder mehrere, der Gesamtanzahl von Strahlern (11) insbesondere individuell ein- und auszuschalten.

11. Glasschneidevorrichtung (30) nach dem vorherigen Anspruch, weiterhin umfassend einen Sensor (32), der gestaltet ist, um eine Breite einer zu bearbeitenden Verbundglasplatte (20) zu erfassen und als Input für die Steuereinheit (31) bereitzustellen.

12. Glasschneidevorrichtung (30) nach einem der Ansprüche 9 bis 11, wobei jeder Strahler (11) eine Länge aufweist, die kleiner ist als die Breite einer zu bestrahlenden Verbundglasplatte (20).

13. Ein Herstellungsverfahren für ein Strahlersystem (10) zur Bestrahlung unterschiedlich breiter Verbundglasplatten (20), umfassend die folgenden Schritte
- Bereitstellen von mindestens drei länglichen Strahlern (11), und
- Anordnen der Strahler (11) in einer Glasschneidevorrichtung (30) hintereinander auf einer gemeinsamen Längsachse (L),
wobei die länglichen Strahler (11) jeweils zwei Enden (12) aufweisen, die gegenüber der gemeinsamen Längsachse (L) abgewinkelt sind, und
wobei die gemeinsame Längsachse (L) der länglichen Strahler (11) parallel zu einer Schneidachse (X) der Glasschneidevorrichtung (30) angeordnet ist.

14. Verwendung eines Strahlersystems (10) nach einem der Ansprüche 1-8 zur Bestrahlung unterschiedlich breiter Verbundglasplatten (20)

## Claims

1. A radiator system (10) for irradiating differently broad laminated glass panels (20),
which comprises at least three elongate radiators (11),
wherein the elongate radiators (11) are arranged one after another on a common longitudinal axis (L),
wherein the radiator system (10) is arranged in a glass cutting device (30), and
wherein the common longitudinal axis (L) of the elongate radiators (11) is arranged parallel to a cutting axis (X) of the glass cutting device (30),
**characterized in that**
the elongate radiators (11) each comprise two ends (12) which are angled relative to the common longitudinal axis (L).

2. The radiator system (10) according to claim 1, wherein the radiators (11) each comprise a heating coil (13) for heating and/or softening a plastic film (21) inside a laminated glass panel (20).

3. The radiator system (10) according to claim 1 or 2, wherein the angled ends (12) of the radiators (11) have a bend radius (R) relative to the common longitudinal axis (L), and the heating coils (13) in the radiators (11) extend along the common longitudinal axis (L) and beyond the apexes (S) of the bend radii (R).

4. The radiator system (10) according to one of the preceding claims, wherein the radiator system (10) comprises at most 10 elongate radiators (11), preferably at least 6 and/or at most 8 elongate radiators (11).

5. The radiator system (10) according to one of the preceding claims, wherein the radiators (11) each have a length (l) at least 200 mm and/or at most 1200 mm.

6. The radiator system (10) according to one of the preceding claims, wherein the plurality of elongate radiators (11) are each of the same length.

7. The radiator system (10) according to one of the preceding claims, wherein the power density of the radiator system (10) is between 30 and 50 W/cm², preferably between 40 and 50 W/cm².

8. The radiator system (10) according to one of the preceding claims, wherein at least one of the radiators (11) comprises a light exit slit (14) and a reflector (15), wherein the reflector (15) reflects radiation, emitted by the radiator (11) in the direction of the reflector (15), in the direction of the light exit slit (14).

9. A glass cutting device (30) for machining differently broad laminated glass panels (20), comprising a radiator system (10) according to one of the preceding claims.

10. The glass cutting device (30) according to the preceding claim, furthermore comprising a control unit (31) that is designed to switch individual radiators (11), in particular only one or more, of the total number thereof, on and off, in particular individually.

11. The glass cutting device (30) according to the preceding claim, furthermore comprising a sensor (32) that is designed to detect a breadth of a laminated glass panel (20) to be machined and to provide this as an input for the control unit (31).

12. The glass cutting device (30) according to one of claims 9 to 11, wherein each radiator (11) has a length that is smaller than the breadth of a laminated glass panel (20) to be irradiated.

13. A manufacturing method for a radiator system (10) for irradiating differently broad laminated glass panels (20), comprising the following steps
- providing at least three elongate radiators (11), and
- arranging the radiators (11) one after another on a common longitudinal axis (L) in a glass cutting device (30),
wherein the elongate radiators (11) each comprise two ends (12) which are angled relative to the common longitudinal axis (L), and
wherein the common longitudinal axis (L) of the elongate radiators (11) is arranged parallel to a cutting axis (X) of the glass cutting device (30).

14. A use of a radiator system (10) according to one of claims 1-8 for irradiating differently broad laminated glass panels (20).

## Revendications

1. Système de rayonnement (10) pour l'irradiation de plaques de verre composites (20) de différentes largeurs,
qui comprend au moins trois radiateurs longitudinaux (11),
dans lequel les radiateurs longitudinaux (11) sont agencés l'un derrière l'autre sur un axe longitudinal (L) commun,
dans lequel le système de rayonnement (10) est agencé dans un dispositif de découpe du verre (30) et
dans lequel l'axe longitudinal (L) commun des radiateurs longitudinaux (11) est agencé parallèle à un axe de coupe (X) du dispositif de découpe du verre (30),
**caractérisé en ce que**
les radiateurs longitudinaux (11) présentent respectivement deux extrémités (12), qui forment un angle par rapport à l'axe longitudinal (L) commun.

2. Système de rayonnement (10) selon la revendication 1, dans lequel les radiateurs (11) présentent respectivement un serpentin chauffant (13) pour chauffer et/ou ramollir un film plastique (21) dans l'intérieur d'une plaque de verre composite (20).

3. Système de rayonnement (10) selon la revendication 1 ou 2, dans lequel les extrémités angulaires (12) des radiateurs (11) présentent un rayon de courbure (R) par rapport à l'axe longitudinal (L) commun et les serpentins chauffants (13) dans les radiateurs (11) s'étendent le long de l'axe longitudinal (L) commun et au-dessus des crêtes (S) des rayons de courbure (R).

4. Système de rayonnement (10) selon l'une quelconque des revendications précédentes, dans lequel le système de rayonnement (10) comprend au plus 10 radiateurs longitudinaux (11), de préférence au moins 6 et/ou au plus 8 radiateurs longitudinaux (11).

5. Système de rayonnement (10) selon l'une quelconque des revendications précédentes, dans lequel les radiateurs (11) présentent respectivement une longueur (l) d'au moins 200 mm et/ou au plus de 1 200 mm.

6. Système de rayonnement (10) selon l'une quelconque des revendications précédentes, dans lequel les plusieurs radiateurs longitudinaux (11) sont respectivement de longueur identique.

7. Système de rayonnement (10) selon l'une quelconque des revendications précédentes, dans lequel la densité de puissance du système de rayonnement (10) est comprise entre 30 et 50 W/cm², de préférence entre 40 et 50 W/cm².

8. Système de rayonnement (10) selon l'une quelconque des revendications précédentes, dans lequel au moins un des radiateurs (11) présente une fente de sortie de lumière (14) et un réflecteur (15), dans lequel le réflecteur (15) réfléchit le rayonnement émis par le radiateur (11) en direction du réflecteur (15) en direction de la fente de sortie de lumière (14).

9. Dispositif de découpe du verre (30) pour l'usinage de plaques de verre composites (20) de différentes largeurs avec un système de rayonnement (10) selon l'une quelconque des revendications précédentes.

10. Dispositif de découpe du verre (30) selon la revendication précédente, comprenant en outre une unité de commande (31), qui est conçue pour allumer et éteindre séparément, en particulier un seul ou plusieurs, du nombre total de radiateurs (11) en particulier individuellement.

11. Dispositif de découpe du verre (30) selon la revendication précédente, comprenant en outre un capteur (32), qui est conçu pour détecter une largeur d'une plaque de verre composite (20) à usiner et la fournir en entrée à l'unité de commande (31).

12. Dispositif de découpe du verre (30) selon l'une quelconque des revendications 9 à 11, dans lequel chaque radiateur (11) présente une longueur qui est inférieure à la largeur d'une plaque de verre composite (20) à irradier.

13. Procédé de fabrication pour un système de rayonnement (10) pour l'irradiation de plaques de verre composites (20) de différentes largeurs, comprenant les étapes suivantes
- fourniture d'au moins trois radiateurs longitudinaux (11) et
- agencement des radiateurs (11) dans un dispositif de découpe du verre (30) l'un derrière l'autre sur un axe longitudinal (L) commun,
dans lequel les radiateurs longitudinaux (11) présentent respectivement deux extrémités (12), qui forment un angle par rapport à l'axe longitudinal (L) commun et
dans lequel l'axe longitudinal (L) commun des radiateurs longitudinaux (11) est agencé parallèle à un axe de coupe (X) du dispositif de découpe du verre (30).

14. Utilisation d'un système de rayonnement (10) selon l'une quelconque des revendications 1-8 pour l'irradiation de plaques de verre composites (20) de différentes largeurs.
